Europäisches Patentamt

European Patent Office

Office européen des brevets

(19)

(11) Veröffentlichungsnummer: **0 253 964**
**B1**

# EUROPÄISCHE PATENTSCHRIFT

(45) Veröffentlichungstag der Patentschrift:
25.04.90

(51) Int. Cl.⁴: **B62D 53/08**, B62D 47/02

(21) Anmeldenummer: 87106009.1

(22) Anmeldetag: 24.04.87

(54) Knickschutzeinrichtung für Strassenfahrzeuge.

(30) Priorität: 12.07.86 DE 3623655

(43) Veröffentlichungstag der Anmeldung:
27.01.88 Patentblatt 88/4

(45) Bekanntmachung des Hinweises auf die Patenterteilung:
25.04.90 Patentblatt 90/17

(84) Benannte Vertragsstaaten:
DE FR IT SE

(56) Entgegenhaltungen:
DE-A- 3 114 807
DE-A- 3 305 759
DE-A- 3 329 548

(73) Patentinhaber: MAN Nutzfahrzeuge Aktiengesellschaft,
Dachauer Strasse 667 Postfach 50 06 20,
D-8000 München 50(DE)

(72) Erfinder: Ernst, Gerhard, Eichenstrasse 15,
D-8081 Egenhofen(DE)
Erfinder: Michel, Franz, Simonsfeldstrasse 13,
D-8000 München 50(DE)
Erfinder: Wypich, Peter, Dietenhausenerstrasse 7b,
D-8063 Odelzhausen(DE)
Erfinder: Wegner, Manfred, Ruprechtstrasse 7,
D-8011 Kirchheim(DE)

## Beschreibung

Die Erfindung bezieht sich auf eine gattungsgemäße Einrichtung nach Anspruch 1.

Es ist eine Knickschutzeinrichtung nach DE-A 2 420 203 bekannt. Das Wirkelement ist hier eine Gelenksperre, die aufgrund des Signals einer von dem jeweiligen Lenk- und Knickwinkel beeinflußten Winkelvergliechseinrichtung betätigbar ist und eine Einrichtung zum Feststellen des dem jeweiligen Lenkwinkel zugeordneten Knickwinkels aufweist, wobei die Winkelvergleichseinrichtung für den Vergleich des Knickwinkels mit dem maximal zulässigen Knickwinkel (Grenzwert) eingerichtet ist und die Gelenksperre einer Knickwinkelvergrößerung einseitig entgegenwirkend ausgebildet ist.

Eine Knickschutzeinrichtung dieser Art ist überzüchtet und korrigiert auch, wenn normal übliche Einsatzbedingungen und normale Straßenverhältnisse vorliegen. Es hat sich aber in der Praxis gezeigt, daß in der Regel die Spurtreue des Gelenkfahrzeuges durch die Adhäsion der Reifen auf dem Straßenbelag gewährleistet ist und zusätzliche Maßnahmen nur im Ausnahmefall erforderlich sind, so daß auf eine aufwendige Knickgelenksperre mit fortwährendem Abgleich von Lenk- und Knickwinkel verzichtet werden kann.

Aus der DE-A 3 305 759 ist eine Knickschutzeinrichtung für Straßenfahrzeuge, insbesondere Gelenkbusse, bekannt mit mindestens zwei um die Hochachse beweglichen Fahrzeugteilen sowie mit einem zwischen den beweglichen Fahrzeugteilen angeordneten Drehschemel, hydraulischen und/oder mechanischen Endanschlägen, einem doppelwirkenden Hydraulikzylinder, einem Hydraulikblock, einem Knickwinkel- und gegebenenfalls Lenkwinkelgeber und einem elektronischen Steuergerät, wobei über die Meßgrößen Knickwinkel, Knickwinkelgeschwindigkeit und/oder Fahrgeschwindigkeit unterschiedliche hydraulische Dämpfungskräfte im System auslösbar sind.

Es ist weiterhin ein Gelenkfahrzeug bekannt (DE-A 3 114 807) mit einer Vorrichtung zur Dämpfung oder Blockierung der Knickung zwischen den gelenkig verbundenen Fahrzeugteilen, die einen doppeltwirkenden, quer zur Fahrzeuglängsrichtung angeordneten Hydraulikzylinder umfaßt, dessen Kolben an einem Fahrzeugteil, dessen Zylinder am anderen Fahrzeugteil abgestützt ist, wobei die Verschiebbarkeit von Kolben und Zylinder gegeneinander durch wenigstens ein in einer Verbindungsleitung zwischen den beiden Zylinderräumen sich befindendes Hydraulikventil steuerbar ist und die Dämpfungs- oder Blockierkräfte zwischen den Fahrzeugteilen mittels sich auf einer Umfangsfläche eines Segmentes auf- und abspulenden Zugseilen übertragen werden.

Der Erfindung liegt nun die Aufgabe zugrunde, die vorbeschriebene Einrichtung für die Dämpfung dahingehend weiterzubilden, daß praxisnahe wirksame Parameter zu ihrer Steuerung aufgezeigt werden.

Dies wird erfindungsgemäß durch die kennzeichnenden Merkmale des Anspruchs 1 erreicht.

Rückwärts-Rangierfahrt ist die einzige Situation im Verkehr, die ein Blockieren der Gelenkfahrzeugteile erforderlich macht, um ein klappmesserartiges, einen irregulären Fahrtablauf verursachendes Verhalten der Fahrzeugkomponenten zu verhindern. Der Lenkwinkelabgriff kann über Potentiometer oder über Näherungsschalter erfolgen.

Nach einer Ausgestaltung der Erfindung ist vom Fahrerhaus eine hydraulische Dämpfung oder gegebenenfalls eine die Blockierung aktivierende Anfahrhilfe betätigbar. Bei normalen und bekannten Fahrsituationen, z. B. im Stadtverkehr, empfiehlt es sich, auf eine Automatik, die dann oft auch nicht notwendige und eher behindernde Korrekturen des Fahrzustandes bewirkt, zu verzichten. Es ist dann in Ausnahmesituationen und vor allem als Anfahrhilfe sinnvoller, die entsprechenden Dämpfungs- oder Blockiermittel per Hand zu betätigen.

Weitere Vorteile und Merkmale der Erfindung sind den Patentansprüchen, der Beschreibung und den Zeichnungen zu entnehmen.

Die Erfindung ist in einem Ausführungsbeispiel dargestellt.

Es zeigt:

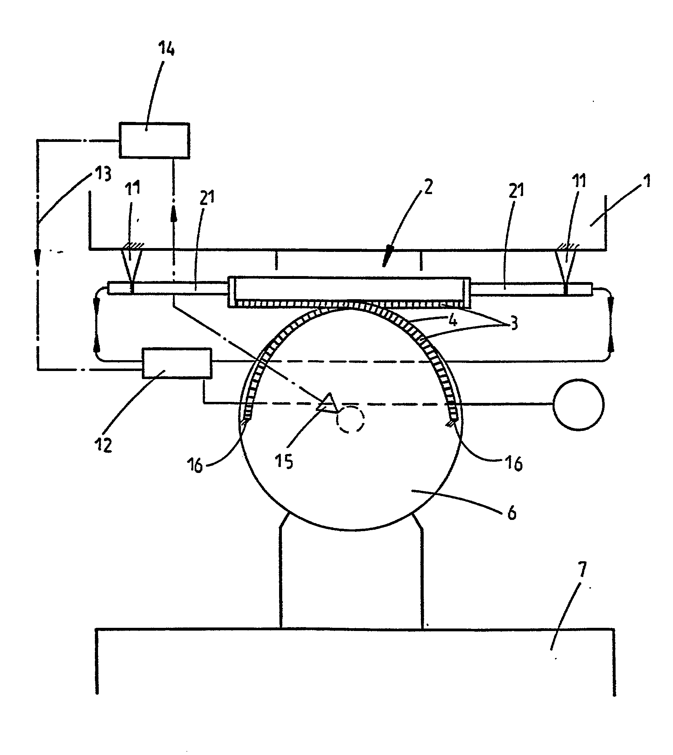

Fig. 1 eine schematische Darstellung der Knickschutzeinrichtung.

Das Gelenkfahrzeug besteht aus einem ersten Fahrzeugteil (1) (Vorderwagen) und einem zweiten Fahrzeugteil (7) (Nachläufer). Vorderwagen (1) und Nachläufer (7) sind über ein Drehgelenk mit einer Drehscheibe (6) verbunden. Die Drehscheibe (6) ist bezüglich der Vertikalachse drehfest mit dem Nachläufer (7) verbunden. Am rückwärtigen Ende des Vorderwagens (1) ist zwischen Lagerböcken (11) die Kolbenstange (21) eines Hydraulikzylinders (2) eingespannt.

Auf dem in der Mitte der Kolbenstange (21) befestigten, nicht sichtbaren Kolben ist ein Zylinderrohr verschiebbar gelagert. Das Zylinderrohr ist an beiden Enden gegen die Kolbenstange (21) abgedichtet, so daß zwei geschlossene, in ihrem Volumen veränderbare Zylinderräume entstehen. Diese Zylinderräume sind über eine Verbindungsleitung entweder direkt oder über einen Druckspeicher miteinander verbunden, wobei in der Verbindungsleitung zumindest ein Absperr- oder regelbares Dämpfungsventil eingesetzt ist. An jedem Ende des Zylinderrohres ist ein Zugseil (3) verankert. Jedes dieser Zugseile (3) ist über die Umfangsfläche eines Kreissegmentes (4) gespannt und mit seinem zweiten Ende auf der Drehscheibe (6) verankert. Die Verankerungspunkte der Zugseile (3) auf der Drehscheibe (6) sind mit (16) bezeichnet.

Bei Kurvenfahrt des Gelenkfahrzeuges dreht sich die Drehscheibe (6) relativ zum Vorderwagen (1), wodurch sich jeweils ein Zugseil (3) von der Umfangsfläche des Segmentes (4) abwickelt und im selben Maße sich das andere Zugseil (3) auf das Segment aufwickelt. Hierdurch wird das Zylinderrohr auf dem Kolben der Kolbenstange (21) verschoben, so daß das Hydraulikfluid von einem Zylinderraum verdrängt und in den anderen eingebracht werden muß. Ist in die Verbindungsleitung zwischen den beiden Zylinderräumen ein Vorratsgefäß geschaltet, so sind sinnvollerweise zwei Ventile zu verwenden, mit denen jeweils ein Zylinderraum ganz oder teilweise abgesperrt werden kann, was zu einer Blockierung oder Drosselung der Bewegbarkeit des Zylinderrohres auf dem Kolben bzw. der Kolbenstange führt. Bei direkter Verbindung der beiden Zylinderräume durch eine Verbindungsleitung kann ein Blockier- bzw. Drosselventil ausreichen. Durch diese Blockierung bzw. Drosselung wird die Kriechbewegung der beiden Fahrzeugteile gegeneinander entweder unterbunden (beim vollständigen Schließen des Ventils) oder gedämpft bei Drosselung des Fluidstromes durch ein Ventil. Der mit (12) bezeichnete Hydraulikblock ist über eine Verbindungsleitung (13) mit einem elektronischen Steuergerät (14) verbunden, daß die von entsprechenden Gebern (15) eingespeisten Parameter Knickwinkel, Knickwinkelgeschwindigkeit und Fahrgeschwindigkeit verarbeitet und auswertet und entsprechende Befehle auf den Hydraulikblock abgibt.

## Patentansprüche

Knickschutzeinrichtung für Straßenfahrzeuge, insbesondere Gelenkbusse, mit mindestens zwei um die Hochachse beweglichen Fahrzeugteilen (1, 7), sowie mit einem zwischen den beweglichen Fahrzeugteilen angeordneten Drehschemel (6), mit Seilführung, hydraulischen und/oder mechanischen Endanschlägen, einem doppeltwirkenden Hydraulikzylinder (2), Seilen (3) mit Führungen, einem Hydraulikblock (12), einem Knickwinkel- und gegebenenfalls Lenkwinkelgeber (15), und einem elektronischen Steuergerät (14), wobei über die Meßgrößen Knickwinkel, Knickwinkelgeschwindigkeit und/oder Fahrgeschwindigkeit unterschiedlich hohe hydraulische Dämpfungskräfte im System auslösbar sind, dadurch gekennzeichnet, daß eine manuell betätigbare Knickwinkelsperre in beiden Richtungen um die Hochachse wirksam setzbar ist, derart, daß beim Rückwärtsfahren (Rangieren) aus dem Vergleich des Knickwinkels mit dem aus dem Lenk- und Knickwinkel resultierenden Grenzbereich des maximal zulässigen Knickwinkels ein optisches und/oder akustisches Signal auslösbar ist, das dem Fahrer oder auch automatisch, eine Gasrücknahme und/oder ein Betätigen der Feststellbremse anweist.

## Claims

Anti-jackknife device for road vehicles, and articulated buses in particular, with at least two vehicle portions moving around the vertical axis of plane (1, 7) plus a turntable (6) installed between the movable vehicle portions, with a cable mechanism, hydraulically and/or mechanically operated final stops, a double-acting hydraulic cylinder (2), ropes (3) with locating arrangements, a hydraulic block (12), sensors for transmission of the jackknife and – if necessary – the steering angles (15), and an electronic control unit (14). The dampening forces of the system are governed on the basis of the data relating to the jackknife angle, the jackknife angle frequency and/or the travelling speed. The inventive feature is the fact that a manually operated jackknife angle lock can be applied around the vertical axis of plane in both directions to the effect that while the vehicle is reversing (shunting) a visual and/or audible signal can be emitted on the basis of the data acquired from a comparison of the actual jackknife angle with the limit value of the maximum jackknife angle (which in turn is determined on the basis of the relation between the steering angle and the jackknife angle). This signal either tells the driver to ease his foot off the accelerator and/or to actuate the parking brake, or it performs these tasks automatically.

## Revendications

Installation antiflambage pour véhicules routiers, notamment bus articulés, comportant au moins deux parties de véhicule (1, 7) mobiles autour d'un axe vertical ainsi qu'une sellette (6) prévue entre les parties mobiles du véhicule, avec un guidage à câbles, des butées de fin de course hydrauliques et/ou mécaniques, un vérin hydraulique (2) à double effet, des câbles (3) avec des moyens de guidage, un bloc hydraulique (12), un capteur d'angle de flambage et le cas échéant de l'angle de direction (15) et d'un dispositif de commande électronique (14), les grandeurs mesure c'est-à-dire l'angle de flambage, la vitesse de variation de l'angle de flambage et/ou la vitesse de déplacement du véhicule déclenchant dans le système, des forces d'amortissement hydrauliques d'amplitudes différentes, installation caractérisée par un verrou antiflambage à commande manuelle, susceptible d'être mis en œuvre dans les deux directions, autour de l'axe vertical, de façon que lors du déplacement en marche arrière (manœuvre de garage), partant de la comparaison de l'angle de flambage et de la plage limite résultant de l'angle de direction et de l'angle de flambage pour l'angle de flambage maximum, on déclenche un signal optique et/ou acoustique qui indique au conducteur ou de manière automatique, qu'il faut lever le pied de l'accélérateur et/ou actionner un frei de blocage.